# EUROPEAN PATENT APPLICATION

(11) **EP 1 564 612 A2**
(43) Date of publication of application: **17.08.2005**
(21) Application number: 05100611.2
(22) Date of filing: 31.01.2005
(51) Int. Cl.: G05B 23/02

(54) **Bathing unit system controller having abnormal operational condition identification capabilities**

(30) Priority: 02.02.2004 US 768130; 26.04.2004 US 831114
(71) Applicant: 9090-3493 Quebec Inc., Quebec, Quebec G2E 5W6 (CA)
(72) Inventor: Laflamme, Benoit, G1R 2X8, Quebec (CA); Gaudreau, Daniel, G6Z 3G5, St-Jean Chrysostome (CA)
(74) Representative: Herbjörnsen, Rut

(57) **Abstract**

A controller for identifying an abnormal operational condition in a bathing unit system that includes a power source and a set of bathing unit components. The controller comprises a power control device (33) and a processing module (40). The power control device (33) is capable of acquiring a first state and a second state. In the first state, said power control device enables the power source to supply power to the set of bathing unit components, and in the second state, said power control device prevents the power source from supplying power to the set of bathing unit components. The processing module (40) is operative for detecting an abnormal operational condition associated with the bathing unit system, and more particularly with the controller itself. Upon detection of an abnormal operational condition associated with the controller, the processing module causes the power control device to acquire the second state.

## Description

### Cross reference to related applications

This application is a continuation-in-part of co-pending U.S. Patent Application Serial No 10/768,130, which was filed on February 2, 2004. The contents of the above document are herein incorporated by reference.

### Field of the invention

The present invention relates to controllers suitable for use in bathing unit systems and, more particularly, to controllers adapted for detecting abnormal operational conditions in bathing unit systems.

### Background

Bathing unit systems that include control systems are well known in the art. Examples of such bathing unit systems include whirlpoois, hot tubs, bathtubs, therapeutic baths and swimming pools, among others Typically, these bathing unit systems include various functional components, such as water pumps, heating modules, filter systems, air blowers, ozone generators, and lighting systems, among others. It is generally, the control system of the bathing unit system that actuates and manages the various functional components of the bathing unit system for setting the different operational characteristics of these functional components For example, the control system can control the activation and deactivation of the water pumps and of the heating module in order to maintain the water within the water receptacle at a desired temperature.

Generally, bathing unit control systems include a controller to which the various bathing unit components are connected. This controller is adapted to control the power supplied from a power source to each one of the various components. More specifically, in response to signals received from a user of the bathing unit system, for example via a control panel, and/or in response to signals received from various sensors, the controller will activate or de-activate the various bathing unit components by supplying power, or ceasing to supply power, to those components.

The various functional components of a bathing unit system are susceptible to abnormal operational conditions, in which they operate in manners that do not correspond to their respective normal operational conditions. An abnormal operational condition may result, for example, from an operational failure in one or multiple components of the bathing system Such an operational failure in a functional component can be due to a mechanical or electronic malfunction in the component, or to the component experiencing operating conditions in which it was not designed to operate. Traditional control systems are generally able to detect and control abnormal operational conditions that result due to a failure of one or more of the various bathing unit components.

Abnormal operational conditions may also occur within the controller of a bathing unit system. Unfortunately, traditional control systems are not equipped to detect and control abnormal operational conditions that occur due to a failure of the controller An operational failure within the controller may be caused by, for example, corrupted software or a circuit overheating, among other possibilities.. When the controller experiences such an operational failure, the controller may be damaged and/or lose its ability to control the activation and de-activation of the various functional components of the bathing unit system In such a case, it is desirable that there be an emergency feature for preventing further damage to the bathing unit system, and preventing harm to users of the bathing unit system.

In light of the above, there is a need in the industry to provide a controller suitable for a bathing system that alleviates at least in part the problems associated with existing controllers.

### Summary

In accordance with a broad aspect, the invention provides a controller for a bathing unit system The bathing unit system includes a power source and a set of bathing unit components The controller comprises a power control device and a processing module The power control device interfaces between the power source and the set of bathing unit components and is capable of acquiring either one of a first state and a second state. In the first state, the power control device enables the power source to supply power to the set of bathing unit components, and in the second state, said power control device prevents the power source from supplying power to the set of bathing unit components The processing module is in communication with the power control device and is operative for detecting an abnormal operational condition associated with the bathing unit system and, upon detection of an abnormal operational condition of the bathing system, causing the power control device to acquire the second state.

In a non-limiting example of implementation, the controller includes an output module, wherein upon detection by the processing module of an abnormal operational condition of the bathing unit system, the output module is operative for conveying information to a user indicative of an error condition.

In accordance with another broad aspect, the invention provides a method for monitoring a bathing unit system that includes a power source, a set of bathing unit components and a power control device for interfacing between the power source and the set of bathing unit components The power control device is capable of acquiring a first state and a second state In the first state, the power control device enables the power source to supply power to the set of bathing unit components, and in the second state, the power control device prevents the power source from supplying power to the set of bathing unit components.

The method comprises detecting an abnormal operational condition associated with the bathing unit system and causing the power control device to acquire the second state upon detection of an abnormal operational condition associated with the bathing unit system.

In accordance with yet another broad aspect, the invention provides a bathing unit system comprising a power source, a set of bathing unit components in communication with the power source, a power control device and a processing module The power control device interfaces between the power source and the set of bathing unit components and is capable of acquiring a first state and a second state. In the first state, the power control device enables the power source to supply power to the set of bathing unit components, and in the second state, the power control device prevents the power source from supplying power to the set of bathing unit components The processing module is in communication with the power control device, and is operative for detecting an abnormal operational condition associated with the bathing unit system and causing said power control device to acquire the second state upon detection of an abnormal operational condition associated with the bathing unit system.

In accordance with yet another broad aspect, the invention provides a system for monitoring a controller that is operative for supplying power from a power source to a set of operational components. The system comprises a power control device and a processing module. The power control device interfaces between the power source and the set of operational components and is capable of acquiring a first state and a second state. In the first state, the power control device enables the power source to supply power to the set of operational components, and in the second state, the power control device prevents the power source from supplying power to the set of operational components. The processing module is in communication with the power control device, and is operative for detecting an abnormal operational condition associated with the controller and causing the power control device to acquire the second state upon detection of an abnormal operational condition associated with the controller.

These and other aspects and features of the present invention will now become apparent to those of ordinary skill in the art upon review of the following description of specific embodiments of the invention in conjunction with the accompanying drawings.

### Brief description of the drawings

A detailed description of the embodiments of the present invention is provided herein below, by way of example only, with reference to the accompanying drawings, in which:
Figure 1 is a block diagram of a bathing unit system that is equipped with a controller, in accordance with a non-limiting example of implementation of the present invention;
Figure 2 is a block diagram of the controller of Figure 1 in accordance with a non-limiting example of implementation of the present invention;
Figure 3 is a flow chart depicting a process for monitoring the bathing unit system in accordance with a non-limiting example of implementation of the present invention;
Figure 4 is a block diagram of a diagnostic unit in accordance with a non-limiting example of implementation of the present invention; and
Figure 5A-5C are block diagrams of various embodiments of an output module suitable for use with a controller in accordance with specific non-limiting examples of implementation of the present invention.

In the drawings, the embodiments of the invention are illustrated by way of examples. It is to be expressly understood that the description and drawings are only for the purpose of illustration and are an aid for understanding. They are not intended to be a definition of the limits of the invention.

### Detailed Description

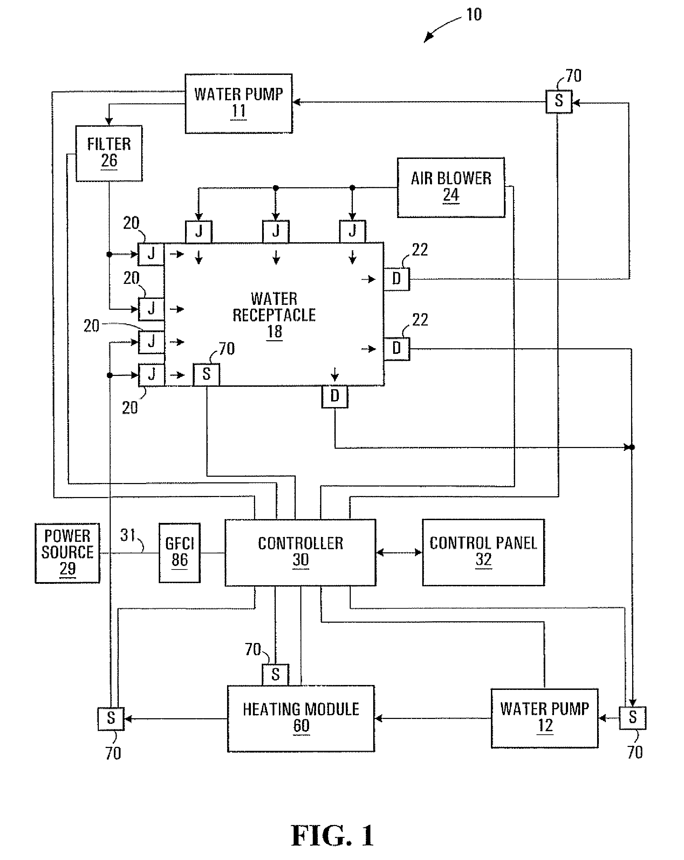

Figure 1 illustrates a block diagram of a bathing unit system 10 in accordance with a specific example of implementation of the present invention. It is to be understood that the expression "bathing unit system", as used for the purposes of the present description, refers to spas, whirlpools, hot tubs, bath tubs, therapeutic baths, swimming pools and any other type of bathing receptacle that can be equipped with a control system for controlling various operational settings.

### The bathing unit system 10

The bathing unit system 10, shown in Figure 1, includes a water receptacle 18 for holding water, a plurality of jets 20, a plurality of drains 22, a control system and a plurality of bathing unit components The bathing unit components shown in Figure 1 include water pumps 11 and 12, filter 26, air blower 24, and heating module 60. It should be understood that the bathing unit system 10 can include more or less bathing unit components without departing from the spirit of the invention. For example, although not shown in Figure 1, the bathing unit system 10 could also include an ozonator, lighting components for lighting up the water in the water receptacle 18, multimedia components such as a CD/DVD player and/or any other components suitable for use in a bathing unit system 10.

In nonnal operation, water flows from the water receptacle 18, through one or more drains 22 and is pumped by water pump 12 through the heating module 60 where the water is heated. The heated water then leaves the heating module 60 and re-enters the water receptacle 18 through one or more jets 20 This cycle of water leaving the water receptacle 18 through one or more drains 22, passing through the heating module 60 and re-entering the water receptacle 18 through one or more jets 20 is repeated continuously while the water pump 12 is active.

In addition, in normal operation, the water also passes through a cycle wherein the water flows from the water receptacle 18, through one or more drains 22 and is pumped by water pump 11 through a filter 26 After having been filtered, the water then re-enters the water receptacle through one or more jets 20. This cycle of water leaving the water receptacle 18 through drains 22, passing through the filter 26 and re-entering the water receptacle 18 through jets 20 is repeated continuously while the water pump 11 is active, in order to keep the water clean from particulate impurities.

In the non-limiting embodiment shown, the control system includes a control panel 32, a controller 30, an (optional) auxiliary I/O device 51 and a plurality of sensors 70 that monitor the various components of the spa.

The plurality of sensors 70 are operative for monitoring various operational conditions of the bathing unit system 10. For example, the sensors 70 may include temperature sensors for monitoring the temperature of the water, and liquid level sensors for monitoring the water level at various locations in the bathing unit system 10. Other sensors that are suitable for use within a bathing unit system 10 can also be included without departing from the spirit of the invention.

The control panel 32 is typically in the form of user interface that allows a user to enter command signals for controlling the various operational settings of the bathing unit system 10. The control panel 32 can include buttons, levers or any other device known in the art for enabling a user to enter input commands for controlling the various operational settings of the bathing unit system 10. In addition, in a non-limiting embodiment, the control panel 32 can include a screen for conveying information to a user, such as the water temperature, the ambient air temperature and the time, among other possibilities.

Some non-limiting examples of the operational settings of the bathing unit system 10 that can be controlled by the control panel 32 include on/off settings, temperature control settings, jet control settings, fighting settings, etc. in a non-limiting example of implementation, the bathing unit system 10 includes entertainment and/or multimedia components, such that the operational settings of the bathing unit may also include audio settings and video settings, amongst others. Consequently, the expression "operational settings", for the purpose of the present invention, is intended to cover operational settings for any suitable component that is part of the bathing unit system 10.

The controller 30 is operative to control the distribution of power supplied to the various bathing unit components on the basis of control signals received from the various sensors 70 and the control panel 32, in order to cause the desired operational settings to be implemented. In the non-limiting embodiment shown, the controller 30 is in communication with a power source 29, via service wiring 31, for receiving electrical power from the power source 29. As such, the controller 30 is able to control the distribution of power supplied from the power supply 29 to the various bathing unit components. More specifically, on the basis of signals received from the various sensors 70 as well as command signals received from the control panel 32, the controller 30 can control the distribution of power to the bathing unit components in order to cause the desired operational settings to be implemented, In a non-limiting implementation, the power source 29 is connected to the controller 30 via service wiring 31 which is passed through a ground fault circuit interrupter (GFCI) 86. The GFCI 86 is adapted for tripping in the presence of a current leakage to the ground, such that the power source 29 is unable to provide power to the set of bathing unit components, The ground fault circuit interrupter (GFCI) 86 provides an added safety measure to the bathing unit system. GFCI's are known in the art, and as such will not be described in further detail herein.

The power source 29 is operative to supply the controller 30 with any conventional power service suitable for residential or commercial use. In a non-limiting implementation, the power source 29 can supply 240 volts (V) AC to the controller, 30 via service wiring 31. In an alternative non-limiting implementation, the power source 29 can supply 120 V AC to the controller 30 via service wiring 31. In an alternative non-limiting implementation, the power source 29 can supply 120 V and 240 V AC to the controller 30 via service wiring 31. It is to be appreciated that other voltage supply values or voltage supply combinations, for example depending on geographical location, are possible without detracting from the spirit and scope of the invention.

The auxiliary I/O device 51, as mentioned above, is an optional component of the bathing unit control system can be in the form of a laptop, a PDA, or a cellphone, among other possibilities. Auxiliary I/O devices 51 can be used to perform a variety of different functions, which will be described in more detail further on in the description.

### The Controller 30

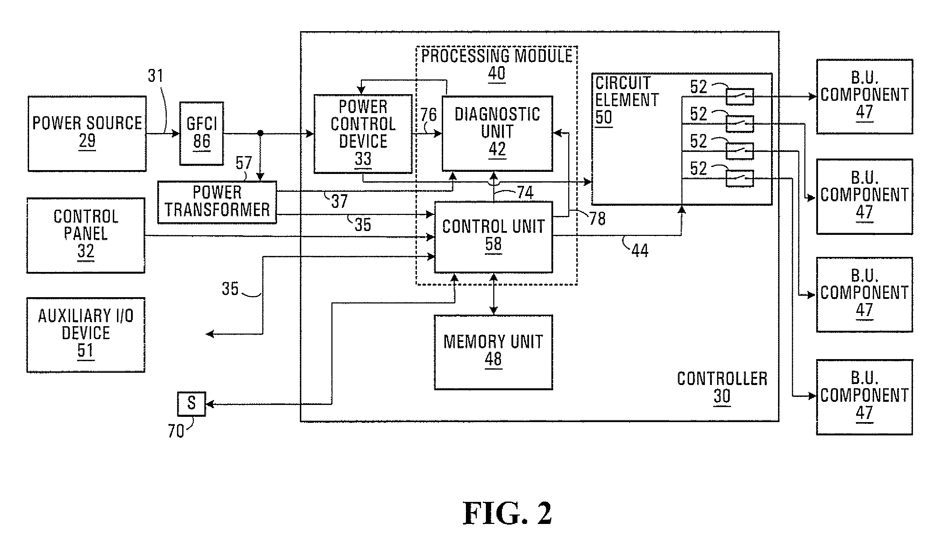

The controller 30, in accordance with a non-limiting embodiment of the present invention is shown in more detail in Figure 2. Figure 2 shows the controller 30 as being in communication with the power source 29, the control panel 32, at least one sensor 70, the auxiliary I/O device 51 and the plurality of bathing unit components 47. For the sake of simplicity, the bathing unit components shown in Figure 2 are all referred to by reference number 47. It should be understood, however, that each of the bathing unit components 47 shown in Figure 2 could be representative of the water pump 11 or 12, the heating module 60, the filter 26, the air blower 26, an ozonator (not shown) or any lighting components, and/or audio/visual components that are included within the bathing unit system 10.

Specific to the present invention, and as will be described below, the controller 30 is operative for detecting an abnormal operational condition associated with the bathing unit system 10 and, upon detection of the abnormal operational condition, is operative for causing a power control device 33 to prevent the power source 29 from supplying power to the set of bathing unit components 47. As such, the controller 30 is operative for monitoring the bathing unit system 10 for causing the power control device .33 to cut the power to the set of bathing unit components 47 in the case where an abnormal operational condition is detected. In a non-limiting example of implementation, the abnormal operational condition is associated to the controller 30, itself.

In the non-limiting embodiment shown, the controller 30 includes a power control device 33, a processing module 40, a circuit element 50 and a memory unit 48 that is in communication with the processing module 40.

It should be understood that the processing module 40 and the memory unit 48 can be integrated into a single physical element or be implemented as distinct elements without detracting from the spirit and scope of the present invention.. Moreover, it is also to be understood that the processing module 40, the memory unit 48, and the circuit element 50 could be part of a single printed circuit board mounted within the housing of the controller 30.

The memory unit 48 is operative for storing measurements and values associated with normal operational conditions of the bathing unit system 10, such that the data stored within the memory unit 48 may be used by the processing module 40 when the bathing unit system 10 is in use. The measurements and values stored in the memory unit 48 can be entered into the memory unit 48 via an input port in the controller 30 For example, the auxiliary I/O device 51 can upload the data to the processing module 40 such as to cause the measurements and values associated with normal operational conditions of the bathing unit system 10 to be written into the memory unit 48. The auxiliary I/O device 51 can be a laptop, a PDA or a cellular phone, for example, and can transmit signals to the processing module 40 over a wireless link or a wire-line link without detracting from the sprit of the invention. For example, the link between the auxiliary I/O device 51 and the control unit 58 can be configured to be used as a serial link such as RS-232, RS-485 or other serial link standard. In an alternative example, the link between the auxiliary I/O device 51 and the control unit 58 may be a wireless link such as a RF or IR link. In such an alternative example, the controller 30 includes a receiver adapted to receive signals over the wireless link from the auxiliary I/O device 51. The auxiliary I/O device 51 is equipped with a corresponding wireless transmitter to transmit the signal to the controller receiver. In yet another embodiment, the memory unit 48 may be directly programmable by the auxiliary I/O device and the processing module 40 may be by-passed during the programming operation.

In an alternative embodiment, the storage in the memory unit 48 of measurements and values associated with normal operational conditions of the bathing unit system 10 can be effected by a self-programming operation, More specifically, during this self-programming operation, the processing module 40 obtains measurements and values associated to different operational conditions of the bathing unit system 10 and stores those measurements and values in the memory unit 48 The processing module 40 is operative to determine whether the measurements/values are "normal" prior to storing them in the memory unit 48. A more detailed description of a self-programming operation is described in more detail in the parent case filed on February 2, 2004.

In yet another alternative embodiment, the measurements and values associated with normal operational conditions of the bathing unit system 10 can be entered into the processing module 40, and stored in the memory unit 48, via entries submitted by the user through the control panel 32. In yet another alternative embodiment, the measurements and values associated with normal operational conditions of the bathing unit system 10 can be pre-programmed into the memory unit 48.

The memory unit 48 may be implemented using any suitable memory device such as an EPROM, EEPROM, RAM, FLASH, disc or any other suitable type of memory device In a preferred implementation, the memory unit 48 includes a non-volatile memory component and the control unit 58 stores the measurements and values in the non-volatile memory component of the memory unit 48. As will be further detailed below, the information stored in the memory unit can be used by the processing module 40 to detect the occurrence of an abnormal operational condition of the bathing unit system 10.

As described above, the controller 30 includes a circuit element 50. The circuit element 50 is adapted to convert power received from the power source 29, via service wiring 31, into a particular voltage and/or current to be supplied to a given bathing unit component 47 connected to the controller 30. Amongst other elements, the circuit element 50 includes a set of actuators 52, such as switches, relays, contactors, or triacs, each adapted to enable or prevent the flow of an electrical current to a respective component 47 of the bathing unit system 10. As such, each one of the bathing unit components 47 of the bathing unit system 10 is capable of acquiring either one of an activated state and a non-activated state. In the activated state, the actuator 52 associated to a given bathing unit component 47 enables the bathing unit component 47 to receive power from the power source 29 by drawing an electrical current at a certain voltage from the controller 30 via a respective electrical cable. The given bathing unit component 47 is then able to utilize the received power to perform the function for which it was designed. Conversely, in the non-activated state, the actuator 52 associated to a given component prevents the given component from receiving power from the controller 30 and as such, the given component is essentially turned off For instance, when in the activated state, pump 12 draws an electrical current at a certain voltage from the controller 30 in order to perform the function for which it was designed, which is basically to pump water from water receptacle 18 through drains 22, into heating module 60, and back into receptacle 18 through jets 20. When in the non-activated state, pump 12 does not draw any current from the controller 30 and thus does not perform any pumping action.

In the non-limiting embodiment shown, the processing module 40 includes a diagnostic unit 42 and a control unit 58. It is the control unit 58 of the processing module 40 that is operative for controlling the distribution of power supplied to the various bathing unit components. By controlling the actuators 52, the control unit 58 is operative for causing each of the bathing unit components 47 to acquire one of the activated and non-activated states More specifically, the control unit 58 is operative for issuing command signals over communication line 44 for causing respective ones of the actuators 52 to either enable or prevent the bathing unit components 47 from receiving power, which causes the respective bathing unit components 47 to acquire either the activated or the non-activated state.

The control unit 58 is operative for issuing command signals to the circuit element 50 for causing each of the bathing unit components 47 to acquire either the activated or the non-activated state, on the basis of signals received from the control panel 32, signals received from the sensors 70 and optionally, signals received from the auxiliary I/O device 51. For example, in the case where a user enters input command signals at the control panel 32, the control unit 58 is responsive to receipt of those input command signals to issue signals to the circuit element 50. If a user of the bathing unit system 10 desires that the water temperature be increased, the user can enter an input command via the control panel 32 indicative that the water temperature should be increased. Upon receipt of this input command signal at the control unit 58, the control unit 58 issues a signal to the circuit element 50 for causing the actuator associated to the heating module to enable power to be supplied to the heating module. As such, the heating module acquires the activated state such that it acts to heat up the water. Alternatively, the control unit 58 may be adapted to receive command signals from the auxiliary I/O device 51, which could be in the form of a laptop, a PDA or a cellular phone. It should be appreciated that the control unit 58 can communicate with the I/O device 51 over a wireless link or a wire-line link without detracting from the spirit of the invention.

In yet another embodiment, the control unit 58 can issue signals to the circuit element 50 on the basis of signals received from the sensors 70. For example, in the case where the sensor 70 is a water temperature sensor, and the control unit 58 has been programmed to keep the water temperature within a predetermined temperature range, upon receipt of a signal from the sensor 70 indicative that the water temperature has fallen below the minimum temperature value of the predetermined temperature range, the control unit 58 issues a signal to the circuit element 50 for causing the heating module to acquire the activated state. Likewise, upon receipt of a signal from the sensor 70 indicative that the water temperature has exceeded the maximum temperature value of the predetermined temperature range, the control unit 58 issues a signal to the circuit element 50 for causing the heating module to acquire the non-activated state.

As described above, the processing module 40 further includes a diagnostic unit 42 that is in communication with the control unit 58. The diagnostic unit 42 is operative for monitoring the operational conditions of the bathing unit system 10 in order to detect when an abnormal operational condition of the bathing unit system 10 occurs. In a more specific case, the diagnostic unit 42 is operative to detect when an abnormal operational condition occurs within the controller 30 itself. As will be described in more detail further on, upon detection of an abnormal operational condition within the controller .30, the diagnostic unit 42 is operative for causing the power control device 33 to prevent power from being supplied from the power source 29 to the set of bathing unit components 47.

As shown in Figure 2, the power control device 33 interfaces between the power source 29 and the plurality of bathing unit components 47. As such, the power supplied by the power source 29 to the circuit element 50, via service wiring 31, passes through the power control device 33. The power control device 33 is adapted for acquiring a first state and a second state. When the power control device 33 is in the first state, it is activated, meaning that the power source 29 is able to supply power to the set of bathing unit components 47. In general, it is the control unit 58 that maintains the power control device 33 in the first state during normal operation of the bathing unit system 10. However, as described above, upon detection of an abnormal operational condition, it is the diagnostic unit 42 of the processing module 40 that is operative for causing the power control device 33 to acquire the second state, such that the power source 29 is prevented from supplying power to the set of bathing unit components 47 Consequently, when the power control device 33 is in the second state, regardless of the positions of actuators 52, the bathing unit components 47 do not receive any power for operation and thus are all shut off.

As such, the power control device 33 acts as a security feature for preventing the power source 29 from supplying power to the plurality of bathing unit components 47 when an abnormal operational condition occurs within the bathing unit system 10, and more specifically within the controller 30, In general, the power control device 33 is generally caused to acquire the second state when the processing module 40 detects an abnormal operational condition of the bathing unit system 10 that cannot be resolved by the control unit 58 In a non-limiting embodiment the power control device 33 can be a power contactor, a latching relay, a non-latching coil, or a plurality of relays that, in combination, are able to cut the power to the bathing unit components 47.

As shown in Figure 2, the power source 29 supplies power to the controller 30 via service wiring 31. The service wiring 31 can include four conductor wires, namely a first line wire (line1), a second line wire (line2, second phase), a neutral wire and a ground wire. In a non-limiting example of implementation, when in the second state, the power control device 33 cuts the power flow from at least one of the first and second line wires, which is sufficient to prevent power for the power source 29 from reaching the set of bathing unit components 47. Providing a power control device 33 that is operative to cut only one of the first and second line wires is less costly than providing a power control device 33 that is operative to cut multiple line wires, However, in an alternative embodiment, when in the second state, the power control device 33 is operative to cut the power flow along three of the power line wires, namely line1, line2 and neutral.

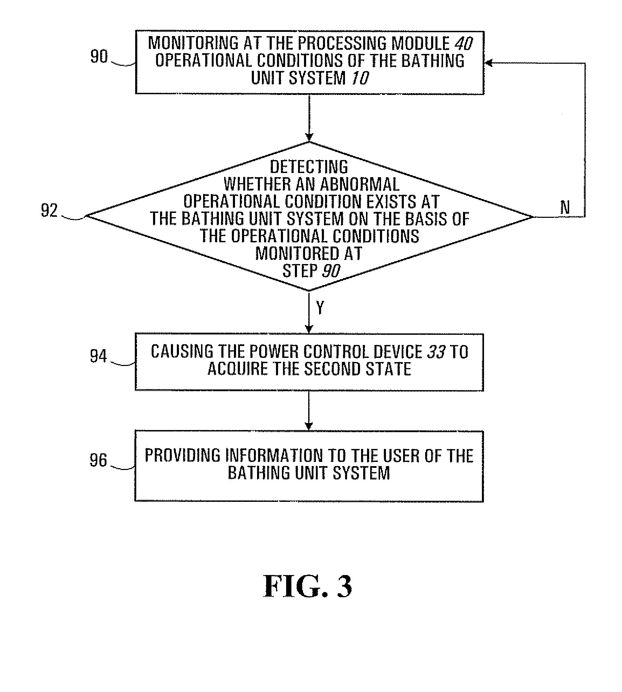

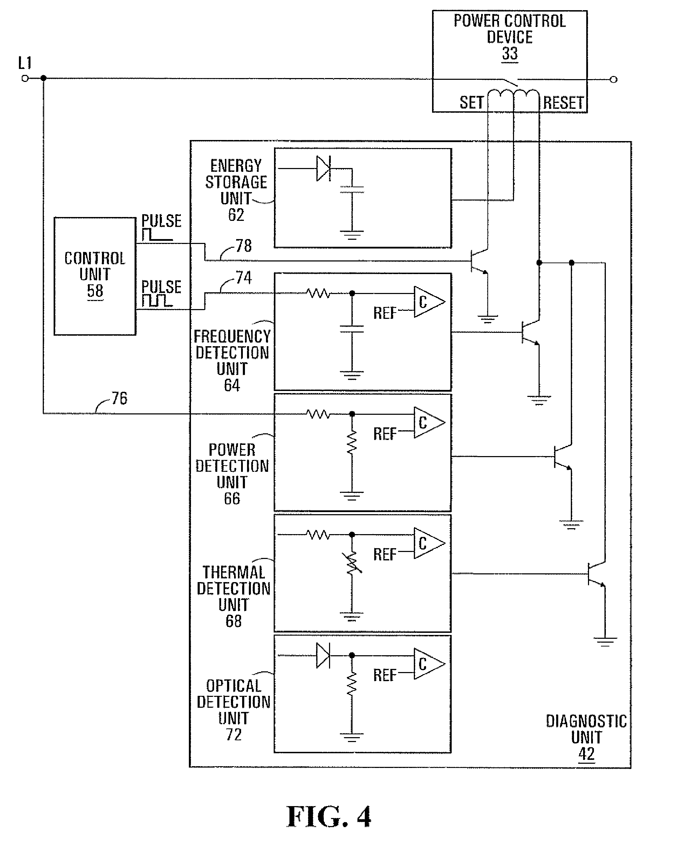

A more detailed explanation of the manner in which the diagnostic unit 42 detects an abnormal operational condition of the bathing unit system 10 will be described in more detail below with respect to Figures 3 and 4.

It should be understood that although the control unit 58 and the diagnostic unit 42 are shown as separate elements, the functionality of the diagnostic unit 42 and the control unit 58 could be integrated into a single element without departing from the spirit and scope of the present invention. It will also be appreciated that the functionality of the processing module 40 may be implemented as a programmable logic block or by using any suitable hardware, software or combination thereof.

### Flow Chart of Figure 3

Shown in Figure 3 is a broad example of a process used by the processing module 40 for monitoring the operational conditions of the bathing unit system 10. At step 90, the processing module 40 monitors one or more operational conditions of the bathing unit system 10, and more specifically, one or more operational conditions of the controller 30 The term "operational conditions" as used herein, refers to measurements associated to various readings, such as temperature readings, power readings and frequency readings, as well as to the presence of certain signals, or abnormal environmental conditions within the controller 30.

At step 92, on the basis of the operational conditions monitored at step 90, the processing module 40 detects whether an abnormal operational condition of the controller 30 exists on the basis of the operational conditions monitored at step 90 The manner in which the processing module 40 detects the presence of an abnormal operational condition will be described in more detail below with respect to Figure 4. In the case where the processing module 40 does not detect the presence of an abnormal operational condition, the processing module 40 returns to step 90, and continues monitoring the operational conditions of the bathing unit system 10, However, in the case where the processing module 40 does detect the presence of an abnormal operational condition, the processing module 40 proceeds to step 94, wherein it causes the power control device 33 to acquire the second state, such that the power source 29 is prevented from supplying power to the bathing unit components 47.

Optionally, once the processing module 40 has caused the power control device 33 to acquire the second state, the processing module 40 may proceed to step 96, wherein the processing module 40 provides information to a user of the bathing unit system 10. The information provided to a user can be indicative of the fact that the bathing unit components 47 have all been shut down, or the information can be indicative of the actual abnormal operational condition that caused the power control device 33 to cause the bathing unit components 47 to be shut down. The manner in which information is communicated to one or more users of the bathing unit system 10 will be described in more detail below.

It should be understood that step 90, wherein the processing module 40 monitors the operational conditions of the bathing unit system 10, can occur continuously, or can be initiated periodically at preset time intervals or at random time intervals. For example, a preset time interval could be every minute, or every 30 seconds In the case where step 90 is initiated at random time intervals, the processing module 40 might include a random number generator, for example.

Alternatively, it is within the scope of the present invention for step 90 to be initiated following a certain condition. For example, step 90 may be initiated upon reception by the processing module 40 of a signal indicative of an explicit command to enter step 90. Such a command could be entered by a user of the bathing unit system 10 via the control panel 32, for example, Alternatively, step 90 may be initiated upon start up of the bathing unit system 10 or upon the activation and/or deactivation of a bathing unit component 47. Or, step 90 can be initiated each time the user enters a command signal at the control panel 32. Other conditions based upon which the processing module 40 could initiate step 90 will be known to those of skill in the art and as such will not be described in more detail herein.

### Diagnostic Unit 42

Shown in Figure 4 is a more detailed diagram of a diagnostic unit 42, in accordance with a non-limiting embodiment of the present invention. As shown, the diagnostic unit 42 is in communication with the power control device 33 and the control unit 58, and includes an energy storage unit 62, a signal frequency detection unit 64, a power detection unit 66, a thermal detection unit 68 and an optical detection unit 72.

As shown in Figure 4, in normal operation and upon start up of the bathing unit system 10, the control unit 78 is operative to issue a signal to the power control device 33 over communication link 78 for causing the power control device 33 to remain in the first state, such that the power source 29 is able to provide power to the set of bathing unit components 47. It is the diagnostic unit 42 that then performs steps 90 through 94 of the process described above. As will be described in more detail below, in the case where the diagnostic unit 42 detects an abnormal operational condition, the diagnostic unit 42 is operative to issue a signal to the power control unit 33 from one of the detection units 64, 66, 68 and 72 listed above, for causing the power control device to acquire the second state, such that the power source 29 is unable to supply power to the set of bathing unit components 47.

In the non-limiting embodiment where the power control unit .33 is a power contactor, as shown in Figure 4, the control unit 58 is operative to issue a signal over communication link 78 to the power contactor for "setting" the power contactor, such that the power contactor acquires the first state. In the first state, the power contactor is "closed", thereby permitting the power source 29 to supply power to the set of bathing unit components 47. Upon detection of an abnormal operational condition within the controller 30, at least one of the detection units 64, 66, 68 and 72 of the diagnostic unit 42 issues a signal to the power contactor for "resetting" the power contactor, such that the power contactor acquires the second state. In the second state, the power contactor is "open", thereby preventing the power source 29 from supplying power to the set of bathing unit components 47.

In accordance with the non-limiting embodiment shown in Figure 4, the diagnostic unit 42 is operative for monitoring the following operational conditions of the controller 30, during step 90 of the method described above:
1. the frequency of a certain signal;
2. the power level supplied by the power source 29;
3. the internal temperature of the controller 30;
4. the presence of electric arcs within the controller 30; and
5. the receipt of a command signal indicative that the power control device 33 should acquire the second state.

On the basis of these operational conditions, the diagnostic unit 42 is operative for detecting the presence of an abnormal operational condition within the controller 30. The manner in which the diagnostic unit 42 detects the presence of abnormal operational conditions will be described in more detail below with respect to each of the detection units 64, 66, 68 and 72 listed above.

It should be understood that the processing module 40 may be implemented as a processor, as discrete logic, as a FPGA (Field Programmable Gate Array, as an analog circuit, or as a combination thereof, among other possibilities.

In addition, it should be understood that each of the diagnostic unit 42 and the control unit 58, as well as the controller 30 itself, may be implemented as a processor, as discrete logic, as a FPGA (Field Programmable Gate Array, as an analog circuit, or as a combination thereof, among other possibilities.

### Frequency Detection Unit 64

As shown in Figure 4, the diagnostic unit 42 includes a frequency detection unit 64 that is in communication with the control unit 58 via communication link 74. The frequency detection unit 64 is operative to monitor the pulse frequency of a particular signal issued by the control unit 58, where this particular signal is characterized by a known, predetermined frequency value. In a non-limiting example of implementation, the particular signal is generated by the software in the control unit 58 on the basis of the speed of software's the main program loop. The frequency detection unit 64 monitors this particular signal in order to ensure that the frequency of the signal generated on the basis of the speed of the main program loop corresponds to the predetermined frequency value. It should be understood that for the purposes of this specification, the term "frequency value" could also encompass a frequency range.

When the control unit 58 is functioning properly, and in accordance with its internal command logic, the particular signal monitored by the frequency detection unit 64 over communication link 74 will have a pulse frequency that corresponds to a normal frequency value or range. Conversely, when the control unit 58 is not functioning property, for example when the control software is corrupt or lost, no pulse frequency will be received at the frequency detection unit 64, or the particular signal will have a pulse frequency that is outside of the normal frequency range. When this happens, the frequency detection unit 64 determines that the control unit 58 is not functioning properly, and may be unable to properly manage the bathing unit components 47, which could lead to a potentially dangerous situation for the user. For example, if the heating module 60 is in an activated state, and the control unit 58 is unable to cause the heating module 60 to acquire a non-activated state due to the fact that its internal logic is corrupt or lost, then the water in the water receptacle 18 could overheat to a temperature that is dangerous for a user of the bathing unit system 10.

As such, the frequency detection unit 64 is in communication with the control unit 58 via communication link 74, and is operative for detecting an abnormal operational condition within the controller 30 when the frequency of the particular signal issued by the control unit 58 over communication link 74 has a frequency that does not correspond to a predetermined frequency value or range. In this manner, the frequency detection unit 64 performs a "watchdog" function, with regard to the control unit's command logic and/or software.

As mentioned above, the diagnostic unit 42 detects the presence of an abnormal operational condition, when the frequency detection unit 64 detects that the pulse frequency received over communication link 74 does not correspond to a predetermined frequency value, For example, the diagnostic unit 42 detects the presence of an abnormal operational condition, when the frequency detection unit 64 no longer receives a pulse frequency over communication link 74 This could indicate, for example, that the control unit's software has been last.

Alternatively, the diagnostic unit 42 detects the presence of an abnormal operational condition, when the frequency detection unit 64 detects that the pulse frequency received over communication link 74 is above or below a predetermined frequency value For example, in the case where the control unit's software has become corrupt, such that main program loop is executed at a much faster rate than normal, the pulse frequency of the signal received at the frequency detection unit 64 would not correspond to a predetermined frequency value or range In a non-limiting example of implementation, the predetermined frequency value or range, against which the pulse frequency received over communication link 74 is compared, is stored in the memory unit 48 of the controller, As such, in the case where the predetermined frequency value is a specific frequency value, the frequency detection unit 64 detects the presence of an abnormal operational condition of the controller 30 when the frequency of the signal received over communication link 74 does not equal the predetermined frequency value.

Once the frequency detection unit 64 has detected an abnormal operational condition within the controller 30, meaning that the pulse frequency of the particular signal received from the control unit 58 does not correspond to the predetermined frequency value, the frequency detection unit 64 issues a signal for causing the power control device 33 to acquire the second state. As such, in the case where the control unit's 58 software is lost or corrupted, the diagnostic unit 42 prevents all power from being provided to the bathing unit components 47, thereby shutting down the bathing unit components 47.

It should be understood that the validation of the processing module's integrity can be done in a variety of other ways that are know in the art.

### Power Detection Unit 66

As shown in Figure 4, the diagnostic unit 42 includes a power detection unit 66 that receives a reading of the power supplied by the power source 29 via communication link 76. The power detection unit 64 is operative to monitor the power issued by the power source 29 in order to ensure that this power does not fall below a predetermined power level.

As such, the power detection unit 66 is operative for detecting an abnormal operational condition within the controller 30 when the power level supplied by the power source 29 falls below a predetermined power level.

Although not shown in Figure 4, in a further, non-limiting example of implementation, the power detection unit 66 is further operative to monitor the power exiting from power transformer 57, in order to monitor the lower voltage power being supplied to the control unit 58. This lower voltage power is used by the control unit 58 to power various circuitry. As shown in Figure 2, the diagnostic unit 42 is operative for receiving such a power reading from the power transformer 57, via communication link 37. As such, the power detection unit 66 is operative for detecting an abnormal operational condition within the controller 30 when the power level supplied by the power transformer 37 fails below a predetermined power level.

In a non-limiting example of implementation, the predetermined power levels associated to the power source 29 and the power transformer 57 are stored in the memory unit 48 of the controller 30. As such, the power detection unit 66 detects the presence of an abnormal operational condition of the controller 30 when the power level supplied by the power source 29 falls below the predetermined power level stored in the memory unit 48, or the power detection unit 66 detects the presence of an abnormal operational condition of the controller 30 when the power level supplied by the power transformer 57 falls below a predetermined power level stored in the memory unit 48, The predetermined power level or levels stored in the memory unit 48 can be pre-programmed into the memory unit 48, or can be entered into the memory unit 48 via the control panel 32 or an auxiliary I/O device 51, or can be entered into the memory unit 48 via a self-programming operation performed by the processing module 40.

It should also be understood that the power level supplied by the power source 29 can be plugged into a formula, such that it is the result of the formula that is compared with a predetermined power level stared in the memory unit 48.

In a further non-limiting example of implementation that is not shown in the Figures, the monitoring of the power can be done directly at the power source 29.

Once the power detection unit 66 has detected an abnormal operational condition of the bathing unit system 10, the power detection unit 66 issues a signal for causing the power control device 33 to acquire the second state. As such, in the case where there is a loss of the amount of power supplied by the power source 29 or the power transformer 57 to the controller 30, which may imply a failure of the power source 29 itself and which could lead to problems within the controller 30, the diagnostic unit 42 prevents all power from being provided to the bathing unit components 47.

### Thermal Detection Unit 68

Referring again to Figure 4, the diagnostic unit 42 further includes a thermal detection unit 68 that is operative to detect when the internal temperature within the controller 30 exceeds a predetermined temperature value. As such, the thermal detection unit 68 is operative to detect and prevent any abnormal occurrence of overheating within the controller 30.

The thermal detection unit 68 can include any type of heat sensor brown in the art For example, in a non-limiting embodiment, the thermal detection unit 68 can include thermocouples, thermistors, infrared sensor (thermopile) and/or thermal fuses. In a further non-limiting example of implementation, the thermal detection unit 68 can include a smoke detector.

As shown in Figure 2, the controller 30 includes various different functional components such as the processing module 40 and the circuit element 50, each of which includes electrical circuitry During use, this electrical circuitry generates heat While a certain amount of heat is normal, it is desirable to avoid the case where the controller 30 overheats abnormally, since such an overheat situation can cause the circuitry, and therefore the functional components, to be damaged.. Replacing a damaged controller 30 can be both time consuming and costly for the owner of the bathing unit system 10 Furthermore, in a worse case scenario, the excessive overheating of the controller 30 can result in an electrical fire within the controller, which can be very dangerous for a user of the bathing unit system 10.

As such, in order to avoid the situation where the controller 30 overheats abnormally, the thermal detection unit 68 is operative for detecting an abnormal operational condition within the controller 30, when the internal temperature of the controller 30 exceeds a predetermined temperature value. It should be understood that for the purposes of this specification, the term "temperature value" could also encompass a temperature range.

In a first non-limiting example of implementation, such as in the case where the temperature sensor of the thermal detection unit 68 is a thermistor, or a thermocouple, the predetermined temperature value is a properly of the temperature sensor. For example, the predetermined temperature can be a defined by a thermal fuse. When the internal temperature of the controller 30 exceeds the predetermined temperature value, the thermal sensor is triggered, thus causing the thermal detection unit 68 to detect an abnormal operational condition of the bathing unit system 10.

In an alternative non-limiting example of implementation, the predetermined temperature value is stored in the memory unit 48 of the controller 30 As such, the thermal detection unit 68 can include a thermometer for taking readings of the internal temperature of the controller 30, and can compare those readings to the predetermined temperature value stored in the memory unit 48 In such an embodiment, the thermal detection unit 68 detects the presence of' an abnormal operational condition within the controller 30 when the internal temperature of the controller 30 exceeds the predetermined temperature value stored in the memory unit 48. As described above, the predetermined temperature value stored in the memory unit 48 can be pre-programmed into the memory unit 48, or can be entered into the memory unit 48 via the control panel .32 or an auxiliary I/O device 51, or can be entered into the memory unit 48 via a self-programming operation performed by the processing module 40.

It should also be understood that the internal temperature of the controller 30, as determined by the thermal detection unit 68 can be plugged into a formula, such that it is the result of the formula that is compared with a predetermined temperature value stored in the memory unit 48.

In another alternative non-limiting example of implementation, the predetermined temperature value can be an average temperature value that is obtained based on the temperature within the controller 30 over a certain amount of time In such an embodiment, the thermal detection unit 68 is operative to regularly measure the temperature within the controller 30, and to re-compute the average temperature value, based on a series of temperature measurements that are temporarily stored in the memory unit 48 and that were taken over the certain amount of time. In this embodiment, the thermal detection unit 68 detects an abnormal operational condition within the controller 30 when the internal temperature value of the controller, 30 exceeds the average of the temperature value taken over a certain amount of time. It should be understood that the average temperature value can be taken based on readings taken over any predetermined amount of time, such as I minute, or 1 hour.

In an alternative example of implementation, the thermal detection unit 68 is operative for detecting an abnormal operational condition within the controller 30 when the thermal detection unit 68 detects smoke within the controller 30.

Once the thermal detection unit 68 has detected an abnormal operational condition within the controller 30, meaning that the internal temperature of the controller 30 exceeds the predetermined temperature value, the thermal detection unit 68 issues a signal for causing the power control device 33 to acquire the second state As such, in the case where the internal temperature of the controller 30 becomes too hot, the diagnostic unit 42 prevents all power from being provided to the bathing unit components 47, thereby shutting down the bathing unit components 47. As such, damage to the controller 30, and the possibility of a fire within the bathing unit system 10, can be avoided.

### Optical Detection Unit 72

As shown in Figure 4, the diagnostic unit 42 also includes an optical detection unit 72 that is operative for detecting the presence of electric arcs within the controller 30 In general, and as known in the art, arcing is often caused by a joint that has been badly soldered, an overheated connection that results from a worn out relay or other bad components, or a loose connection. In the case where electrical arcs are present, there is the possibility that the control unit 58 is not functioning properly. In addition, the occurrence of electrical arcs is undesirable, because they increase the chances of electrical fires, and can cause damage to the controller 30. In addition, the occurrence of electrical arcs may reduce the life expectancy of the actuators 52.

It should be understood that the optical detection unit 72 can include any type of optical sensor known in the art. For example, in a non-limiting embodiment, the optical detection unit 72 can include infrared sensors, phototransitors, LEDs or any other type of light sensing technology.

In use, the optical detection unit 72 is operative to detect an abnormal operational condition of the controller 30 when there is the presence of electrical arcs within the controller 30.

Once the optical detection unit 72 has detected an abnormal operational condition of the controller 30, meaning that there is the presence of electrical arcs within the controller 30, the optical detection unit 72 issues a signal for causing the power control device 33 to acquire the second state. As such, in the case where electrical arcs occur within the controller 30, the diagnostic unit 42 prevents all power from being provided to the bathing unit components 47, thereby shutting down the bathing unit components 47.

### Emergency-off command signal

In a non-limiting example of implementation, the control unit 58 includes an input for receiving an emergency-off command signal from a user of the bathing unit system For example, the emergency off command signal can be entered by a user via an "emergency" button located on the control panel 32 or anywhere else on the spa, or within range of the spa location. The control unit 58 is then responsive to the emergency off command signal for causing the power control device 33 to acquire the second state For example, in the case where the control unit 58 issues a signal over communication link 78 for causing the power control device to acquire the first state, then upon receipt of the emergency-off signal, the control unit 58 ceases to issue a signal over communication link 78 for maintaining the power control device 33 in the first state. As such, in the absence of a signal from the control unit 58 for causing the power control device 33 to remain in the first state, the power control device 33 reverts to the second state It should be understood that the emergency-off signal entered by a user of the bathing unit system 19 could be issued directly to the diagnostic unit 42, or the power control device 33, thereby bypassing the control unit 58.

In an alternative, non-limiting example of implementation, the control unit 58 is operative for detecting when one or more of the actuators 52 is stuck. When one or more actuators is stuck open or closed, it means that the control unit 48 is unable to control the bathing unit component associated with the stuck actuator 52. Depending on the bathing unit component, this can be a dangerous situation. For example, in the case where the actuator 52 associated with the heating module is stuck with the heating module in the activated position, the control unit 58 has no way to prevent the water temperature from heating to an unsafe temperature In addition, in the case where an actuator associated with a water pump gets stuck, heat is generated by the water pump, which will cause the bathing unit system 10 to overheat and create an unsafe temperature for a user.

Under normal operating conditions, the control unit 58 is in communication with a water temperature sensor 70 that is operative for taking measurements of the water temperature within the water receptacle 18. As such, the control unit 58 can cause the heating module, and the water pumps, to intermittently acquire the activated and non-activated states, such that the water temperature remains within a predetermined temperature range. The predetermined temperature range can be specified by a user via the control panel 32 for example.

In the case where an actuator 52 associated to either one of the heating module or the water pumps is stuck, such that the water temperature will overheat, the control unit 58 will send one or more signals to the circuit element 50, for causing the heating module and/or the water pump to acquire a non-activated state. Simultaneously, the control unit 58 will monitor the water temperature sensor 70, and will notice that regardless of the fact that the heating module and/or the water pumps should be in the non-activated states, that the water temperature continues to rise In a non-limiting example of implementation, when the water temperature sensor 70 indicates that the water temperature has exceeded an upper threshold, the control unit 58 will realize that something is wrong, and can cease to issue a signal to the power control device 33, via communication link 78. In the absence of a signal from the control unit 58, the power control device 33 will acquire the second state, wherein it prevents the power source 29 from providing power to the bathing unit components 47, As such, in the case where the water temperature is approaching an unsafe temperature, the control unit 58 is operative for causing the diagnostic unit 42 to cause the power control device 33 to acquire the second state.

### Energy Storage Unit 62

In a non-limiting embodiment, the diagnostic unit 42 includes an energy storage unit 62 that is operative for storing energy that can be used by the diagnostic unit 42 in an emergency situation For example, in the case where the power source 29 fails to provide sufficient power to the diagnostic unit 42, such that the diagnostic unit 42 is unable to function property, the diagnostic unit 42 can use the energy reserved in the energy storage unit 62 for causing the power control device 33 to acquire the second state.

### Power to Control Unit 58

Referring again to figure 2, the control unit 58 is in communication with the power source 29 via service wiring 35 in the embodiment shown, the power from the power source 29 passes through a power transformer 57 prior to entering the control unit 58, such that the voltage can be reduced.

As shown, the control unit 58 is powered independently from the power control device 33 This means that even when the power control device 33 is in the second state, such that the power supplied by the power source 29 is interrupted and the set of bathing unit components 47 are shut down, the control unit 58 continues to receive power for operation.

It should be understood that although Figure 2 shows that the control unit 58 is powered by power source 29 via service wiring 35, it is within the scope of the present invention for the control unit 58 to be powered from a second power source (not shown) that is separate from the power source 29 For example, the bathing unit system 10 may include a control unit power source that is dedicated for providing power to the control unit 58.

As such, the controller 30 is designed such that when the power control device 33 is in the second state the control unit 58 continues to receive power for operation. This enables the control unit 58 to continue certain operational functions even when the power control device 33 has cut off the power from the power source 29 to the set of bathing unit components 47 For example, in a non-limiting embodiment, and as described above with respect to optional step 96 in Figure .3, in the case where the power control device 33 is caused to acquire the second state, the processing module 40, and more specifically the control unit 58, is operative to provide information to a user. As described above, the information provided to the user can be indicative of the fact that there has been an emergency shutdown of the set of bathing unit components 47, or can be indicative of the abnormal operational condition that caused the emergency shutdown, among other possibilities.

Therefore, in accordance with optional step 96 described above with respect to Figure 3, once the power control device 33 has been caused to acquire the second state, such that it prevents the power source 29 from providing power to the bathing unit components 47, the control unit 58 conveys information to a user indicative of an error condition.

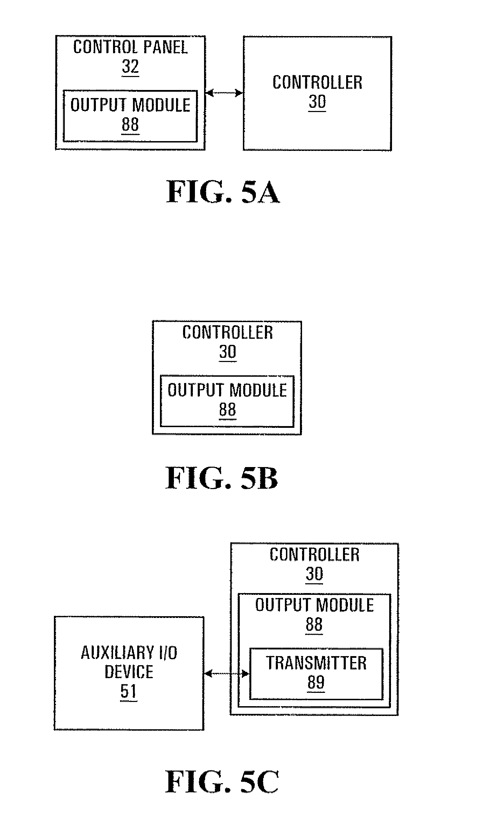

In the specific non-limiting examples of implementation shown in Figures 5A through 5C, the bathing unit system 10 includes an output module 88 in communication with the controller 30. It is the output module 88 that is adapted for conveying the information indicative of the error condition to a user of the bathing unit system 10.

In the specific example of implementation shown in Figure 5A, the output module 88 is a part of the control panel 32, and may include, for example, a visual display element and/or an audio element to respectively convey to a human operator visual and/or audible information indicative of an error condition. The visual display element could be, for instance, a liquid-crystal display (LCD) or one or more light-emitting diodes (LEDs). As such, the information indicative of an error condition may be conveyed to a user in a visual format by displaying a message on a screen of the output module 88, or by turning ON (or OFF) an appropriate LED or causing an appropriate LED to blink Alternatively, the information indicative of an error condition may be conveyed in an audio format such as by producing a beeping sound, or a verbal message from a voice synthesizer.

In another non-limiting embodiment shown in Figure 5B, the output module 88 is in the housing of the controller 30 and is concealed from the user under typical operation In such an embodiment, the output module 88 can be accessed by the user when the user realizes that power has been cut off from the bathing unit components 47.

In a non-limiting embodiment, the diagnostic unit 42 and the control unit 58 are in communication with each other such that the control unit 58 is operative to identify the abnormal operational condition within the controller 30 that prompted the diagnostic unit 42 to cause the power control device 33 to acquire the second state For example, the control unit 58 is operative to identify whether the abnormal operational condition was caused by a thermal overheat or a loss of power, for example. As such, the control unit 58 can convey to a user, via the output module 88, a text message or code to identify the abnormal operational condition that caused the power control device 33 to acquire the second state. It should be understood that in the case where the abnormal operational condition is an abnormal frequency of the particular signal issued by the control unit 58, indicative that the control unit software is corrupt, then the controller 30 may not be able to convey to the user information indicative of the error condition.

Specific other examples of the manner in which the output module 88 could convey information indicative of an error condition include, without being limited to: text messages, alpha and/or numeric codes, audible signals, JR/RF signals, color lights and discrete LEDs amongst others.

In an alternative embodiment not shown in the drawings, the output module 88 is positioned remotely from both the control panel 32 and the controller 30. In such a case, when the messages are displayed in a visual format, the output module 88 may be positioned anywhere such that the messages may be displayed anywhere in the bathing unit system 10 or in the proximity of the bathing unit system 10. For example, the message may be displayed on the controller 30, on any component of the bathing system, on a dedicated user interface, on a user operable console of the bathing unit system 10, on an external direct wire device, on a display device positioned on the skirt of the bathing unit system 10 or on a device positioned remotely from the controller 30. In a specific non-limiting implementation, the output module 88 may be positioned remotely from the controller 30, such as within a house. Depending on where the output module 88 is positioned, it should be understood that the controller 42 can be in either wireless or wire-line communication with the output module 88.

In another non-limiting embodiment shown in figure 5C, the output module 88 includes a transmitter or transceiver 89 operative to transmit a signal conveying information to a user indicative of an error condition. The signal may include information indicative of the abnormal operational condition within the controller 30 that caused the emergency shutdown of the bathing unit components. The transmitter/transceiver 89 is operative to transmit the signal over either one of a wireless link, such as a radio frequency (RF) link or infra-red (IR) link, or alternatively over a wire-line link, The transmitter/transceiver 89 communicates with an auxiliary I/O device 51, such as a laptop, a PDA or a cellular phone to convey information indicative of the error condition to a human operator In a specific non-limiting implementation, the auxiliary I/O device 51 is in the form of a dedicated display module suitable to be positioned inside a house and in wireless communication with the transmitter/transceiver 89 of output module 88. Optionally, the output module 88 is adapted to transmit a signal to processing module 40 to confirm the reception of the signal from the bathing unit system 10.

In yet another alternative embodiment, instead of conveying the information indicative of an error condition to a user in an audio or visual format via an output module 88, the control unit 58 could store the information indicative of the error condition in the memory unit 48, such that a user could obtain the information by downloading it to an auxiliary I/O device 51, such as a PDA , cell phone or a laptop computer.

The above description of the embodiments should not be interpreted in a limiting manner since other variations, modifications and refinements are possible within the spirit and scope of the present invention, The scope of the invention is defined in the appended claims and their equivalents.

## Claims

1. A controller for a bathing unit system, the bathing unit system including a power source and a set of bathing unit components, said controller comprising:
a) a power control device that interfaces between the power source and the set of bathing unit components, said power control device capable of acquiring either one of a first state and a second state, wherein:
i. in the first state, said power control device enables the power source to supply power to the set of bathing unit components, and;
ii. in the second state, said power control device prevents the power source from supplying power to the set of bathing unit components;
b) a processing module in communication with said power control device, said processing module being operative for:
i. detecting an abnormal operational condition associated with the bathing unit system;
ii. causing said power control device to acquire said second state upon detection of an abnormal operational condition associated with the bathing unit system,

2. A controller as defined in claim 1, wherein said processing module comprises:
a) a control unit operative for controlling the set of bathing unit components; and
b) a diagnostic unit operative for:
i. detecting an abnormal operational condition associated with the bathing unit system;
ii. upon detection of an abnormal operational condition, issuing a signal to said power control device for causing said power control device to acquire said second state.

3. A controller as defined in claim 2, wherein said abnormal operational condition detected by said diagnostic unit is associated with said controller of the bathing unit system.

4. A controller as defined in claim 1, wherein said processing module is operative for detecting an abnormal operational condition of said bathing unit system when a temperature of the water in said bathing unit system is above a predetermined temperature level.

5. A controller as defined in claim 3, wherein said diagnostic unit includes a signal frequency detection unit operative for detecting an abnormal operational condition of said controller when the frequency of a particular signal issued by said control unit does not correspond to a predetermined frequency value

6. A controller as defined in claim 3, wherein said diagnostic unit includes a power detection unit operative for detecting an abnormal operational condition of said controller when the power level supplied by the power source falls below a predetermined power level.

7. A controller as defined in claim 6, wherein the predetermined power level is stored in a memory unit of said controller.

8. A controller as defined in claim .3, wherein said controller includes a thermal detection unit operative for detecting an abnormal operational condition of said controller when an internal temperature of said controller exceeds a predetermined temperature value.

9. A controller as defined in claim 8, wherein said predetermined temperature value is stored in a memory unit of said controller.

10. A controller as defined in claim 8, wherein said predetermined temperature value is defined by a thermal fuse.

11. A controller as defined in claim 3, wherein said diagnostic unit includes an optical detection unit operative for detecting an abnormal operational condition of said controller upon detection of the presence of electric arcs within said controller.

12. A controller as defined in claim 1, wherein said power control unit is operative to acquire the second state upon receipt of an emergency-off command signal from a user.

13. A controller as defined in claim 1, wherein said processing module includes an input for receiving command signals from a user, said processing module being responsive to an emergency off command signal received at said input for causing said power control device to acquire said second state.

14. , A controller as defined in claim 1, wherein said power control device is selected from the group consisting of a power contactor, a latching relay, a non-latching coil and a plurality of relays.

15. A controller as defined in claim 2, wherein each bathing unit component in the set of bathing unit components is adapted for acquiring an activated state and a non-activated state, wherein in the activated state a bathing unit component is operative for drawing power from the power source, said controller comprising:
a) a plurality of actuators associated to respective bathing unit components; and
b) an input for receiving command signals from a user of the bathing unit system such that said control unit is operative for controlling said plurality of actuators at least in part on the basis of said command signals, for causing the bathing unit components in the set of bathing unit components to acquire either one of the activated state and the non-activated state.

16. A controller as defined in claim 15, wherein each of said plurality of actuators each includes a relay.

17. A controller as defined in claim 15, wherein said command signals received at said input are entered by a user via a control panel.

18. A controller as defined in claim 1, wherein the set of bathing unit components includes at least one bathing unit component selected from the set consisting of a heating module, a pump, an ozonator, a power supply, a CD player and an air blower.

19. A controller as defined in claim 2, wherein said control unit is powered independently from said power control device, whereby when said power control device is in said second state, said control unit continues to receive power for operation.

20. A controller as defined in claim 2, wherein said diagnostic unit includes an energy storage unit.

21. A controller as defined in claim 1, wherein said controller includes an output module, wherein upon detection by said processing module of an abnormal operational condition of the bathing unit system, said output module is operative for conveying information to a user indicative of an error condition.

22. A controller as defined in claim 21, wherein said information indicative of an error condition includes information indicative of an abnormal operational condition.

23. A controller as defined in claim 21, wherein said output module is operative for conveying the information indicative of the error condition in a visual format.

24. A controller as defined in claim 21, wherein said output module is operative for conveying the information indicative of the error condition in an audio format.

25. A controller as defined in claim 21, wherein said output module is included on a control panel of the bathing unit system.

26. A controller as defined in claim 21, wherein said output module is included on said controller.

27. A method for monitoring a bathing unit system, the bathing unit system including a power source, a set of bathing unit components and a power control device that interfaces between the power source and the set of bathing unit components, the power control device capable of acquiring either one of a first state and a second state, wherein in the first state, the power control device enables the power source to supply power to the set of bathing unit components, and in the second state, the power control device prevents the power source from supplying power to the set of bathing unit components, said method comprising:
a) detecting an abnormal operational condition associated with the bathing unit system;
b) causing the power control device to acquire the second state upon detection of an abnormal operational condition associated with the bathing unit system.

28. A method as defined in claim 27, wherein said abnormal operational condition is associated with a controller of the bathing unit system.

29. A method as defined in claim 28, comprising detecting an abnormal operational condition of the controller when a temperature of the water in the bathing unit system is above a predetermined temperature level.

30. A method as defined in claim 28, comprising detecting an abnormal operational condition of the controller when the frequency of a particular signal does not correspond to a predetermined frequency value.

31. A method as defined in claim 28, comprising detecting an abnormal operational condition of the controller when a power level supplied by the power source falls below a predetermined power level.

32. A method as defined in claim 31, wherein the predetermined power level is stored in a memory unit of the bathing unit system.

33. A method as defined in claim 31, wherein the predetermined temperature value is defined by a thermal fuse.

34. A method as defined in claim 28, comprising detecting an abnormal operational condition of the controller when an internal temperature of the controller exceeds a predetermined temperature value.

35. A method as defined in claim 34, wherein the predetermined temperature value is stored in a memory unit of the bathing unit system.

36. A method as defined in claim 28, comprising detecting an abnormal operational condition of the controller upon detection of the presence of electric ares within the controller.

37. A method as defined in claim 27, comprising causing the power control device to acquire the second state upon receipt of an emergency-off command signal from a user.

38. A method as defined in claim 27, wherein the power control device is selected from the group consisting of a power contactor, a latching relay, a non-latching coil and a plurality of relays.

39. A method as defined in claim 28, wherein each bathing unit component in the set of bathing unit components is adapted for acquiring an activated state and a non-activated state, wherein in the activated state a bathing unit component is operative for drawing power from the power source, said method comprising causing the bathing unit components in the set of bathing unit components to acquire either one of the activated state and the non-activated state, at least in part in response to command signals received from a user.

40. A method as defined in claim 39, wherein said command signals are entered by a user via a control panel.

41. A method as defined in claim 27, wherein the set of bathing unit components includes at least one bathing unit component selected from the set consisting of a heating module, a pump, an ozonator, a power supply, a CD player and an air blower.

42. A method as defined in claim 27, comprising conveying to a user via an output module, information indicative of an error condition, upon detection of an abnormal operational condition of the bathing unit system.

43. A method as defined in claim 42, wherein the information indicative of an error condition includes information indicative of an abnormal operational condition.

44. A method as defined in claim 42, comprising conveying the information indicative of the error condition in a visual format.

45. A method as defined in claim 42, comprising conveying the information indicative of the error condition in an audio format.

46. A method as defined in claim 42, wherein the output module is included on a control panel of the bathing unit system.

47. , A method as defined in claim 42, wherein the output module is included on a controller of the bathing unit system.

48. A bathing unit system comprising:
a) a power source;
b) a set of bathing unit components in communication with said power source; and
c) a controller as defined in either one of claims 1 to 26.

49. A system for monitoring a controller, the controller being operative for managing a set of components by controlling the power supplied by a power source to each of the components, said system comprising:
a) a power control device that interfaces between the power source and the set of components, said power control device capable of acquiring either one of a first state and a second state, wherein:
i. in the first state, said power control device enables said power source to supply power to said set of components, and;
ii. in the second state, said power control device prevents said power source from supplying power to said set of components;
b) a processing module in communication with said power control device, said processing module being operative for:
i. detecting an abnormal operational condition associated with the controller;
ii. causing said power control device to acquire said second state upon detection of an abnormal operational condition associated with the controller.
